# EUROPEAN PATENT APPLICATION

(11) **EP 0 990 575 A2**
(43) Date of publication of application: **05.04.2000**
(21) Application number: 99307750.2
(22) Date of filing: 30.09.1999
(51) Int. Cl.: B62B 3/00

(54) **Stacking of shelves**

(30) Priority: 03.10.1998 GB 9821486
(71) Applicant: Mastermover International Limited, Ashbourne, Derbyshire DE6 1AS (GB); Jed Developments Limited, High Wycombe HP11 2PZ (GB)
(72) Inventor: Jones, Andrew, c/o Mastermover International Ltd., Ashbourne, Derbyshire DE6 1AS (GB); Ewans, John, c/o JED Developments Ltd, High Wycombe Buckinghamshire HP11 2PZ (GB)
(74) Representative: Swindell & Pearson

(57) **Abstract**

An apparatus for use in stacking shelves includes a body (20) having a surface (22) for receiving goods to be stacked and a mounting member (28) for mounting the body on a roll cage (10) such that goods may be placed on the surface (22) for subsequent stacking.

## Description

The invention relates to the stacking of shelves, and particularly to the stacking of shelves of a large shop or supermarket.

Conventionally, goods arriving at a large shop or supermarket are loaded onto roll cages. These are containers which generally include a substantially horizontal base mounted on wheels or rollers and either two or four opposing vertical sides each approximately 6 feet high. The base and sides are generally made up of a framework of thin metal bars.

The goods may be kept in the store on these roll cages, and when goods are to be transferred to supermarket shelves, the roll cage may be wheeled to the approximate location in the shop and the goods transferred either into piles on the floor for subsequent stacking, or directly to the shelf. Free standing steps are provided for reaching the higher shelves. However, during supermarket opening hours, it is undesirable to bring goods into the shopping area on roll cages as it is difficult to stack directly from the roll cages and it is undesirable to leave goods on the floor. Instead, goods may be transferred on to so called 'L shape' trollies. These are smaller, wire framed wheeled trollies, onto which goods may be loaded for easy subsequent stacking. An L shape may be provided with a fold down foot plate for use in reaching higher shelves or the shelf stacker may use a free standing step.

According to the invention there is provided apparatus for use in stacking shelves, the apparatus comprising:
a body having a surface for receiving goods to be stacked; and
means for mounting the body on a roll cage such that goods may be placed on the surface for subsequent stacking.

Preferably the body is removably mountable on the roll cage.

Preferably the body is mountable on the roll cage at a height such that the surface is located between 1m and 1.5m above the bottom of the roll cage.

Preferably the mounting means allows the body to pivot relative to the roll cage when it is mounted on the roll cage. Preferably such pivoting takes place about a substantially vertical axis. Means may be provided for holding the body in a position across an end of the roll cage. These means may include a strap.

Preferably the mounting means includes a mounting member having means for engaging a substantially horizontal bar of the roll cage. Preferably the mounting member includes means for engaging each of two substantially horizontal bars, one substantially above the other. Alternatively, the mounting means may include a mounting member having means for engaging a substantially vertical bar of the roll cage. Preferably such mounting member includes means for engaging each of two substantially vertical bars, which may be adjacent to one another. The mounting member may comprise a metal plate and the means for engaging the bars may comprise portions of metal bent to form inverted channels for receiving the bars.

The apparatus may include an arm rotatably attached to the body. The arm may be attached to the mounting member, thereby to rotatably attach the body to the mounting member. The arm may be rotatably attached to a pin, mounted in or on the body. The pin is preferably substantially vertical when the body is mounted on the roll cage.

The body may be hollows and is preferably made from a plastics material such as polyethelene. The surface for receiving goods to be stacked is preferably substantially planar, and preferably substantially horizontal in use. The surface preferably comprises an upper wall of the body. The surface preferably includes an opening in which a handle is provided. Preferably the handle comprises a bar moulded integrally with the remainder of the body.

Preferably the body includes a central opening. The opening is preferably substantially cuboid, being bounded at its top and bottom and on two sides. However, the opening in the surface may communicate with the central opening.

The body is preferably substantially rectangular in horizontal cross section. Such rectangular cross section may decrease gradually in size from the top to the bottom of the body in use. The body is preferably less than 1.5m in length, less than 1m in width and less than 1.5m in depth.

Preferably the apparatus further comprises a step member removably attachable to the body. Preferably a portion of the step member is receivable within a recess in the body. Preferably the recess is substantially at the base of the body in use. The portion of the step member is preferably slidable into the recess. The step member may include substantially horizontal grooves for receiving portions of the body which project inwardly into the recess. Preferably means are provided for retaining the portion of the step member in the recess. These may include shoulder portions in the grooves.

Preferably the apparatus includes a leg extending downwardly from the body in use. Preferably the leg includes a wheel which engages the ground in use. The wheel may be pivotally mounted on the leg. Preferably the leg is remote from the arm.

The total weight of the apparatus is preferably less than 15kg and most preferably less than 12kg.

According to the invention there is also provided a roll cage provided with apparatus according to any of the previous definitions. Preferably the roll cage is further provided with a bag arrangement comprising two compartments. The bag may be supported by means of a pocket within which a side of the roll cage may be received. The bag may be manufactured substantially from polyester. The compartments may be bounded by rods received in pockets in the bag. The rods may be glass filled polyester or polycarbonate.

The invention will now be described for the purpose of illustration only, with reference to the accompanying drawings, in which:

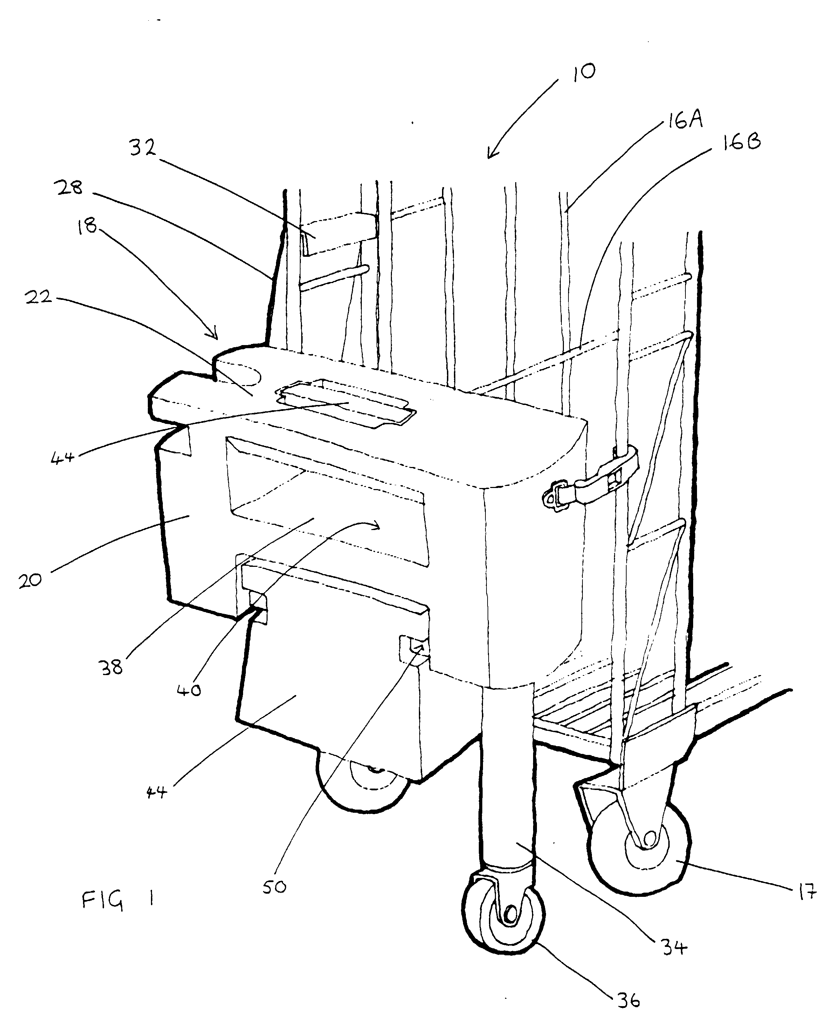

Fig. 1 is a diagrammatic perspective view of a replenishment apparatus according to the invention, located on a roll cage, and with its step in place;
Fig. 2 is a diagrammatic perspective view of the replenishment apparatus of Fig. 1 but with its step removed;
Fig. 3 is a diagrammatic perspective view of the replenishment apparatus of Figs. 1 and 2 with its step in place, and viewed from an alternative direction; and

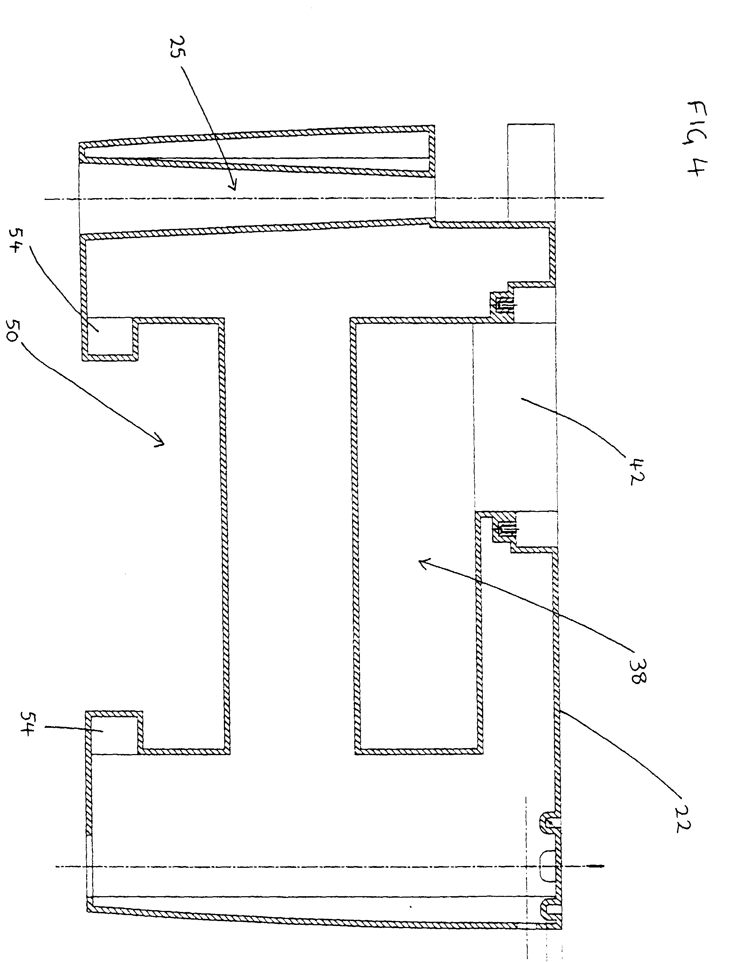

Fig. 4 is a diagrammatic cross section through the body portion moulding for the replenishment apparatus of the other figures.

Referring to the Figures, a roll cage 10 includes a base 12 and sides 14. The base 12 and sides 14 comprise thin metal bars 16, the sides each being made up of vertical bars 16A and horizontal bars 16B. The roll cage 10 is mounted on pivotable wheels 17.

Mounted on the roll cage 10 is a replenishment apparatus 18 according to the invention. The apparatus 18 includes a body 20 of moulded polyethelene. The body includes an approximately rectangular planer upper surface 22 for receiving goods to be stacked as described in more detail hereinafter. The surface is approximately 1m in length and 0.5m in width. The depth of the body is approximately 0.75m.

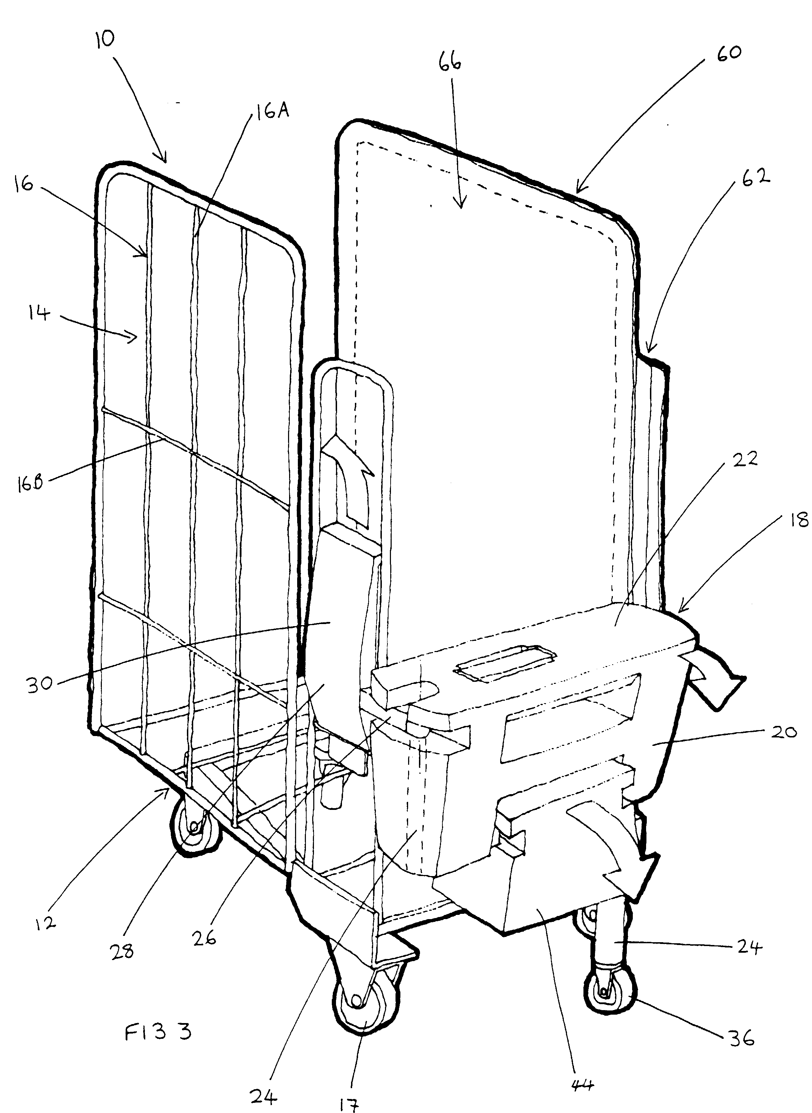

Referring in particular to Fig. 3 the body 20 is provided with a cylindrical rod 24 mounted substantially vertically towards one of its ends. The rod 24 is mounted securely within an opening 25 in the body 20. The rod 24 is rotatably attached to an arm 26.

The arm 26 is attached to a mounting member 28, which is removably mountable on the roll cage 10. The mounting member 28 includes a metal plate 30 and two channel members 32 (only the upper channel member being shown clearly in the drawings). Each channel member 32 is shaped and sized to receive a horizontal bar 16B of the roll cage 10. The channel members 32 are spaced such that the mounting member 28 may be slotted into place on the roll cage with the channel members 32 each receiving a horizontal bar 16B. This holds the mounting member firmly in place from the roll cage 10.

When the mounting member 28 is so mounted on the roll cage, it firmly supports the arm 26 which in turn supports the body 20. Because the arm is rotatably attached to the rod 24, the body 20 can pivot from a position across an end of the roll cage 10 round to a position well away from the end of the roll cage 10.

The body is supported at an end remote from the arm 26 by a leg 34. The leg 34 includes a wheel 36, which engages the ground when the body 20 is mounted on the roll cage 10. The wheel 36 is mounted such that it can pivot relative to the leg 34.

The body 20 includes a central opening 38, for receiving a knife and other tools required for a shelf stacker to undo packaging of products. The opening is bounded at its top and bottom and to opposite sides. Raised edges are provided to the bottom surface 40 of the opening, to prevent equipment from slipping out of the opening.

A passage 42 extends between the opening 38 and the upper surface 32 of the body. Located within the passage 42 is a handle 44 by which the apparatus may be lifted. Lifting the apparatus raises the channel members 32 above the bars 16B of the roll cage and allows the mounting member 28 to be disengaged from the roll cage 10. This enables the apparatus 18 to be moved from one roll cage to another.

The apparatus 18 further includes a step member 44 which is removably mounted under the body 20. The step member 44 may be removed from the body 20 for use by a shelf stacker in reaching higher shelves. The step member 44 is very approximately cuboid, having a flat upper surface 46 on which a person may stand.

An upper portion 48 of the step member 44 is receivable within a narrow recess 50 of the body 20. Substantially horizontal grooves 52 in the step member receive inwardly projecting portions 54 of the body. The grooves 52 are bounded by shoulder portions 56, thereby retaining the step member 44 in place in use. To remove the step member 44 from the body 20, the step member is lifted in order to disengage the shoulder portions 56 from the projecting portions 54 whereupon the step member 44 may be slid out of the recess.

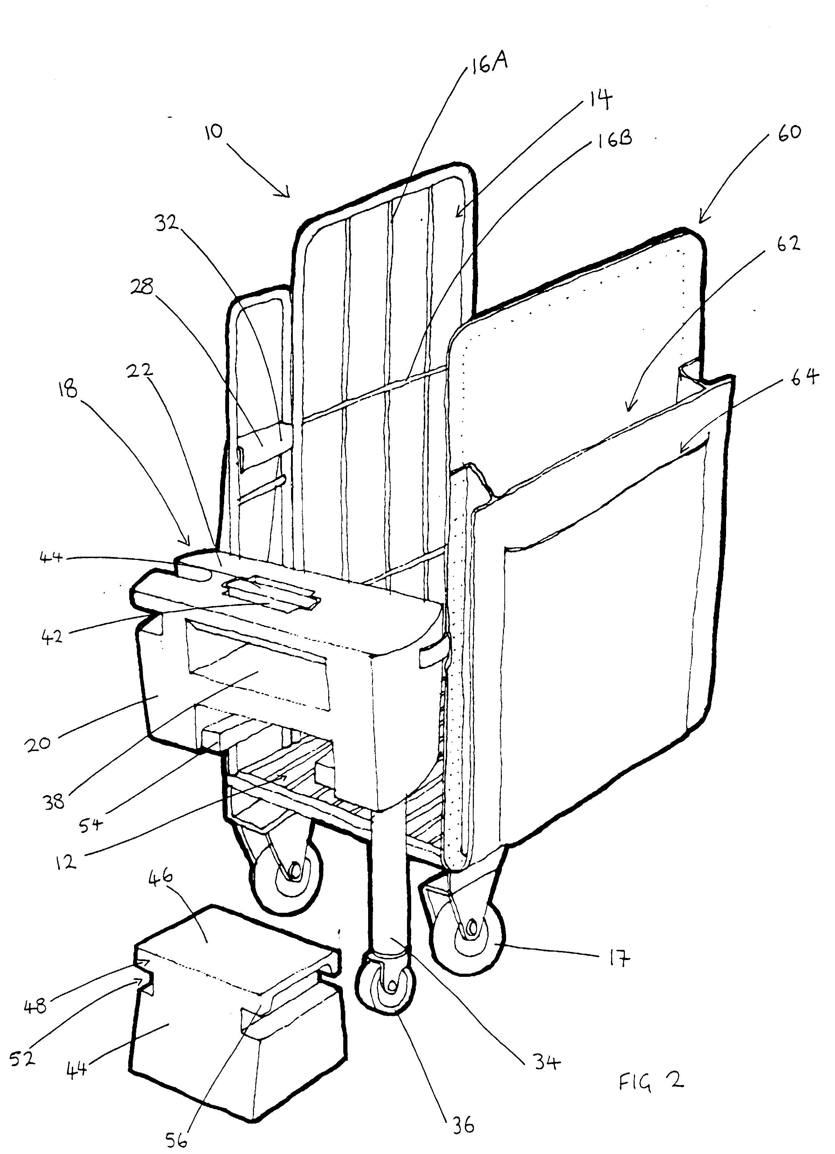

Figs. 2 and 3 show a roll cage 10 provided with a replenishment apparatus 18 and further provided with a bag arrangement 60. The bag arrangement 60 includes two separate compartments 62 and 64 for receiving waste cardboard and polythene respectively. These waste products are subsequently recycled. The bag arrangement 60 is mounted on the roll cage 10 by means of a pocket 66 into which an upper part of the side 14 of the roll cage 10 may be inserted. At the front of each pocket 62, 64 an elongate glass filled polyester bar is stitched into the bag material. This is flexible but very strong. The bag is manufactured substantially from polyester.

Apparatus according to the invention is used as follows. The roll cage 10 is taken from the stores full of a product to be stacked on the shelves. A shelf stacker manoeuvres the roll cage 10 to a position near to a shelf to be stacked and moves products to be stacked on to the upper surface 22 of the body 20. The packaging is then removed from the products, using a knife stored in the opening 38, and cardboard and polythene waste material are put into the two pockets of the bag 60. The body 20 may be pivoted into a suitable position and the product then moved from the surface 22 to the shelves.

A shelf stacker may continue stacking shelves in this way. The body 20 may be pivoted away from the end of the roll cage 10 in order to allow access to products stacked low on the roll cage 10. To reach any high shelf, the shelf stacker may slide the step member 44 out of the body 20 and stand on the surface of the step member.

There is thus provided an apparatus for use in the stacking of shelves which eliminates the need to use an L shape, and makes shelf stacking quicker and easier.

Various modifications may be made to the above described embodiment without departing from the scope of the invention. Additional openings or pockets may be provided in the body, for example to hold a bar-code scanner or a radio. The apparatus could be manufactured in different colours, each colour representing a different area of a supermarket. The means for attaching the body to the roll cage may be varied. The shape of the body and the step member may also be varied.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Apparatus for use in stacking shelves, the apparatus comprising: a body (20) having a surface (22) for receiving goods to be stacked; and means (28) for mounting the body (20) on a roll cage (10) such that goods may be placed on the surface (22) for subsequent stacking.

2. Apparatus according to claim 1 wherein the body (20) is removably mountable on the roll cage (10).

3. Apparatus according to claim 1 or claim 2 wherein the body (20) is mountable on the roll cage (10) at a height such that the surface (22) is located between 1m and 1.5m above the bottom of the roll cage.

4. Apparatus according to any preceding claim wherein the mounting means (28) allows the body (20) to pivot relative to the roll cage (10) about a substantially vertical axis when it is mounted on the roll cage.

5. Apparatus according to any preceding claim wherein means are provided for holding the body in a position across an end of the roll cage.

6. Apparatus according to any preceding claim wherein the mounting means includes a mounting member having means for engaging each of two substantially horizontal bars, one substantially above the other.

7. Apparatus according to claim 6 wherein the mounting member comprises a metal plate and the means for engaging the bars comprises portions of metal bent to form inverted channels for receiving the bar or bars.

8. Apparatus according to any preceding claim wherein the apparatus includes an arm rotatably attachable to the body, and wherein the arm is attached to the mounting member, thereby to rotatably attach the body to the mounting member.

9. Apparatus according to claim 8 wherein the arm is rotatably attached to a pin, mounted in or on the body, the pin being substantially vertical when the body is mounted on the roll cage.

10. Apparatus according to any preceding claim wherein the body is hollow.

11. Apparatus according to any preceding claim wherein the surface of the body for receiving goods to be stacked is substantially planar, and substantially horizontal in use.

12. Apparatus according to any preceding claim wherein the surface of the body for receiving goods to be stacked includes an opening in which a handle is provided.

13. Apparatus according to any preceding claim wherein the body includes a central opening and is substantially rectangular in horizontal cross section.

14. Apparatus according to claim 13 wherein the substantially rectangular cross section decreases gradually in size from the top to the bottom of the body in use.

15. Apparatus according to any preceding claim wherein the apparatus further comprises a step member removably attachable to the body.

16. Apparatus according to claim 15 wherein a portion of the step member is receivable within a recess in the body.

17. Apparatus according to claim 22 wherein the step member is slidable into the recess includes substantially horizontal grooves for receiving portions of the body which project inwardly into the recess.

18. Apparatus according to claim 16 or claim 117 wherein means are provided for retaining the portion of the step member in the recess.

19. Apparatus according to any preceding claim wherein the apparatus includes a leg extending downwardly from the body in use, the leg including a wheel which engages the ground in use.

20. A roll cage provided with apparatus according to any of the previous claims.

21. A roll cage according to claim 20, further provided with a bag arrangement comprising two compartments.

22. A roll cage according to claim 21 wherein the bag may be supported by means of a pocket within which a side of the roll cage may be received.

23. A roll cage according to claim 21 or claim 22 wherein the compartments are bounded by rods received in pockets in the bag.

24. Any novel subject matter or combination including novel subject matter disclosed herein, whether or not within the scope of or relating to the same invention as any of the preceding claims.
